# EUROPEAN PATENT APPLICATION

(11) **EP 2 600 347 A1**
(43) Date of publication of application: **05.06.2013**
(21) Application number: 12194233.8
(22) Date of filing: 26.11.2012
(51) Int. Cl.: G11B 27/034, G11B 27/34

(54) **Method and apparatus for virtual tour creation in mobile device**

(30) Priority: 29.11.2011 US 201113305767
(71) Applicant: Samsung Electronics Co., Ltd, Gyeonggi-do 443-742 (KR)
(72) Inventor: Oks, Eduard, Richardson, TX Texas 75082 (US); Bregman-Amitai, Orna, Richardson, TX Texas 75082 (US); Garnett, Noa, Richardson, TX Texas 75082 (US)
(74) Representative: Jenkins, Richard Gavin

(57) **Abstract**

Provided is a method and apparatus for creating a Virtual Tour (VT) in a mobile device, and in particular, a method and apparatus for creating a VT in a mobile device, in which a VT is created as video in a mobile device. To this end, the method for creating a VT in a mobile device includes capturing an image in a VT creation mode, automatically creating a VT map while capturing the image, and if the VT creation mode is terminated, saving the captured images as a file for the VT.

## Description

### BACKGROUND OF THE INVENTION

### Field of the Invention

The present invention relates to image processing, and more particular, to a virtual tour creation method and apparatus which creates a virtual tour as video in a mobile device.

### Description of the Related Art

By Virtual Tour (VT) it is normally intended to refer to a mode that enables a user to look at a certain place and walk around it through non linear data content. The most famous VT product available today on the web is Google's "Street View", where data is captured by Google a van using dedicated cameras and hardware. There are companies that provide services to create VT content mainly for the real estate agents. However, according to existing solutions the creation of a VT requires dedicated hardware and/or the use of offline editing tools.

The current options for a user to create VT content are:
a) Using a professional company to generate it. Such companies employ dedicated hardware (mainly 360° camera) and dedicated editing tools;
b) Taking images or video and using Photoshop and plug-ins to edit it off-line. However, it takes a long time and requires careful planning of the capturing process; and
c) A tool for easily editing video to create VT is offered. However, in spite of such a solution, planning of the scene is still required any feedback is not given while shooting.

Also in existing solutions, the various editors present much limitation:
- All require prior planning of the shooting scene.
- All are off-line and therefore no feedback is provided to the user while shooting.
- Editing requires time and practice.

### SUMMARY OF THE INVENTION

Accordingly, the present invention provides a method and apparatus for creating a Virtual Tour (VT) in a mobile device, in which a VT can be created through the mobile device without a separate hardware for VT creation.

The present invention also provides a method and apparatus for creating a VT in a mobile device, in which assistance and feedback for capturing are provided to a user during execution of image capturing for VT creation.

The present invention also provides a method and apparatus for creating a VT in a mobile device, in which a VT map is automatically created during execution of image capturing for VT creation.

The present invention also provides a method and apparatus for creating a VT in a mobile device, in which a VT created through the mobile device can be socially shared. According to an aspect of the present invention, there is provided a method and apparatus for creating a VT in a mobile device; the method including capturing an image in a VT creation mode, automatically creating a VT map while capturing the image, and if the VT creation mode is terminated, saving the captured images as a file for the VT.

According to another aspect of the present invention, there is provided an apparatus for creating a VT in a mobile device, the apparatus including a camera, sensors, and a capture engine for capturing an image in a VT creation mode, automatically creating a VT map while capturing the image, and saving the captured images as a file for the VT, if the VT creation mode is terminated.

### BRIEF DESCRIPTION OF THE DRAWINGS

The above and other features and advantages of exemplary embodiments of the present invention will be more apparent from the following detailed description taken in conjunction with the accompanying drawings, in which:
FIG. 1A is a diagram showing a capturing operation for Virtual Tour (VT) creation in a mobile device;
FIG. 1B is a diagram showing an operation of manually modifying an automatically created VT map in a mobile device;
FIG. 1C is a diagram showing an operation of launching a created VT through a viewer in a mobile device;
FIG. 2 is a diagram showing an output signal of an accelerometer provided in a mobile phone during execution of capturing for VT creation in a mobile device;
FIG. 3 is a flowchart showing an operation of translating an image for image matching in a mobile device;
FIG. 4 is a diagram showing a capturing path prior to execution of capturing for VT creation in a mobile device;
FIG. 5 is a diagram showing a Graphic User Interface (GUI) display for guiding capturing during execution of a capturing operation for VT creation in a mobile device;
FIGs. 6A through 8B are diagrams showing an editing operation in a manual map editing step of a mobile device.

### DETAILED DESCRIPTION OF THE EXEMPLARY EMBODIMENTS

In accordance with the invention suitable software is provided on (or otherwise associated with) a camera device, which guides the user in the process of capturing the VT content, thus enabling the online VT creation.

In one embodiment of the invention, inter alia, the following elements are provided:
a) Capturing - guided capturing that gives the user an indication of the scene captured, and instructs the user regarding the shot being currently taken. The acquisition can be in any suitable video format or raw images.
b) Automatic editing - during the capturing process the system selects the relevant frames for display and builds up the scene map. The automatic editing can be an iterative operation.
c) Review and manually edit: the user may review the result and correct or change it where needed. The user sees the VT on the device and decides if he wants to continue shooting or confirm it.
d) Socially share the VT either with friends on a peer to peer basis or through a server. The sharing of the VT has two modes: (1) View Only, (2) Editable version, which includes metadata.

### Acquisition of the VT:

The software associated with the camera device, using image processing technology and/or other sensor's data, analyzes the captured scene while shooting the VT. The capturing process is divided into three main features:
a. Turning around ("scanning");
b. Moving forward and backward ("walking"); and
c. Staying in place and holding the camera ("stop").

According to the invention and based on sensors data and image processing, it is possible to recognize the three different situations mentioned above and to combine them together online in order to create a virtual tour. The user has a GUI, which gives him an indication as to the map scene and the current capturing mode.

A map of the captured tour is created while capturing. The map is used for the virtual tour viewer at later stage.

The abovementioned classification is based on a combination of image processing and of sensors data, because:
- The sensors (without GPS) cannot detect a difference when the user moves forward or backward as compared to when the user stands still.
- Image processing requires non-repetitive patterns to analyze the movement. For example, part of the wall that has no significant pattern may cause an error in detecting turn around activity.

The differentiating between turning around and going forward is based on a combination of parameters from sensors and imaging.

To further illustrate this point, while being outside, where GPS works well, there is a simple way to differentiate - if the camera location changed - the user moved forward and if it did not change - he was either standing or turning around.

The gyro, compass and or accelerometers, on the other hand, cannot tell standing from moving forward. This differentiation must be supported by image processing.

The sensors also suffer from environment noise. For example, the compass is affected by electrical devices found in its vicinities.

The optical flow of consecutive frames can provide the full needed information.

For example, in a predetermined number of consecutive frames,:
- If the pixels are fixed in place - no movement;
- If the flow of pixels is purely horizontal - the user has turned around; and
- If the flow of pixels is such that pixels are spread from the center - this means that the user walked forward.

The aforementioned "optical flow" method is one of the suitable methods to determine camera movement between two frames. Other methods known in the art and not discussed herein in detail for the sake of brevity, can also be used.

The capturing of data for the VT may also be non-continuous. For example a user may start at point A, go to point B and then want to capture the VT route from point A to point C. In this case the user may stop capturing at point B, and restart capturing when he is back in point A.

### Map Creation in Real Time of the VT:

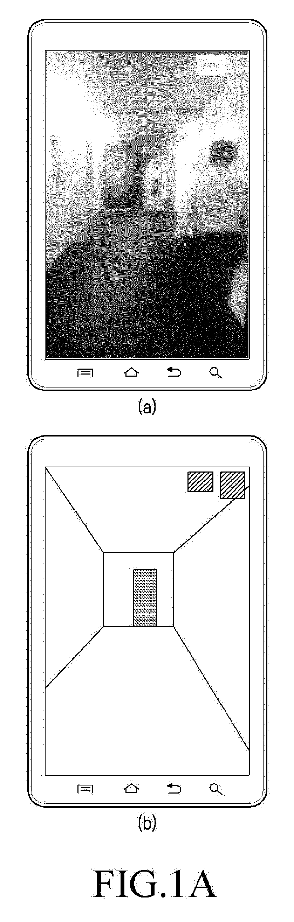

The invention enables the creation and editing to the VT map. As shown in the figures and further discussed in detail below, a schematic map is created during the capture process. This map can be presented to the user while capturing the VT online, as shown in the illustrative example of FIGS. 1A through 1C. An illustrative method to create the map is described below, which enables an average user to create VT content on his mobile device, without the need to use external editing tool, and to see the results during the capturing process.

### Detailed description of an illustrative implementation on a mobile phone with compass and accelerometers:

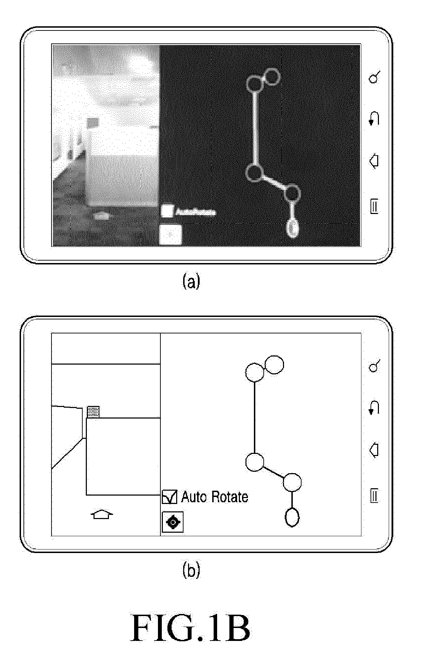

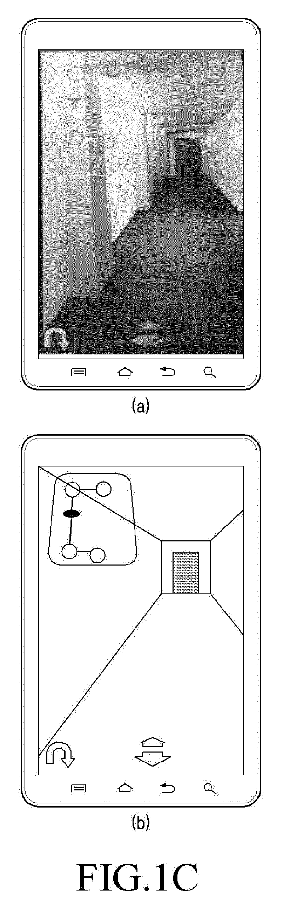

The following illustrative description makes reference to the technical features and the GUI implemented on a mobile phone with compass and accelerometers (but without a gyro). As said, the invention is intended to allow a user to create and share a virtual tour (VT). Once created a virtual tour allows a person to explore a place without actually being there. In one embodiment of the invention an illustrative implementation is divided into 3 stages:
1) Tour capture - the user goes through the tour area and captures a movie of the different places of interest. (a) of FIG. 1A is a diagram showing an operation of capturing an image through a mobile device, and (b) of FIG. 1A is a diagram for briefly describing (a) of FIG. 1A. The capture software estimates the user's position and creates a map which is correlated to the view at each point, by using sensors provided in the mobile device.
2) Tour Map edit - Since the map creation is not optimal (Created with indoor navigation techniques) the user manually modifies the created map at this stage. (a) of FIG. 1B is a diagram showing an operation of manually modifying a VT map automatically created in a mobile device, and (b) of FIG. 1B is a diagram for briefly describing (a) of FIG. 1B.
3) Tour view - a viewer provided with the user's device (which is conventional and therefore not described in detail for the sake of brevity) allows the user to walk through the virtual tour. The user can navigate with the map to different places and see what the creator saw while he captured the map. (a) of FIG. 1C is a diagram showing an operation of launching a created VT through a viewer in a mobile device, and (b) of FIG. 1C is a diagram for briefly describing (a) of FIG. 1C.

### Illustrative Example

### Capture Engine Description

### Engine I/O

The capture engine receives for each frame the below Inputs:
1. Frame buffer.
2. Sensors data - gravity projection on x, y, z directions, north direction projection on x, y, z directions, compass (actually not used).

Through the inputs, the capture engine will then output:
1. Current status (scanning, walking etc).
2. Instruction for keeping / ignoring a previous frame.

From VirtualTourApi.h:
unsigned long VirtualTour_HandleData(
VirtualTourInstance inst, unsigned char *frameBuffer, float accX, float accY, float accZ, float mgtX, float mgtY, float mgtZ, float cmp,
VT_API_FrameResult* pFrameRes // keep or ignore a previous frame
);
The process result is a view table where each kept frame is represented as a single row (see detailed description below).

### Capture Engine processing description (for an illustrative, specific embodiment)

Analysis Performed for each frame
1. Perform a 2D rigid registration relative to the previous frame.
2. Detection stage - Analyze status according to 2D camera position changes and to sensors inputs on last few frames. This step is used to automatically detect scan state (360 deg turn) start and stop and walking state.
3. Handle the frame according to detected status.

Below is a detailed description:

### Rigid registration

The motion estimation of the camera is done by SAD (Sum of Absolute Difference) minimization on a set of significant points.

### Detection stage

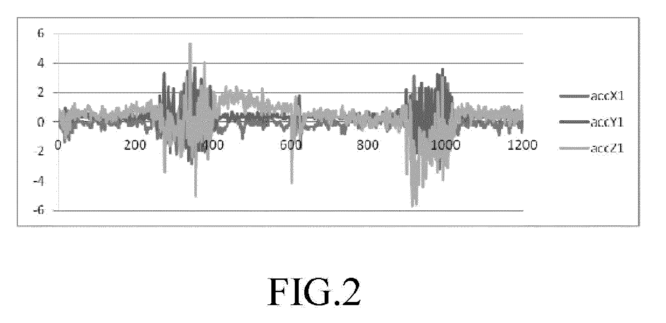

First, the accelerometer inputs' variance is check for the last few frames. Hand shakes while walking are clearly seen on accelerometers input. Scanning happens on frames. FIG. 2 is a diagram showing an output signal of an accelerometer provide in a mobile device during execution of capturing for VT creation in the mobile device.

If the variance is big and we are currently in "walking" mode - continue walking.

If the variance is small and we are currently in "scanning" mode - continue scanning.

### Else - check by 2D registration

If the camera movement by the last few frames' visual information is smooth and horizontal - we are in "scan" mode. Otherwise - in "walk" mode.

If no visual information exists on the last few frames (that is, scanning or walking against a white wall), compass data will replace the visual information in the detection stage.

In general, the visual information is considered more reliable all through the analysis, and azimuth is used only as fallback and for sanity check. This is the result in unreliable inputs used while developing and testing.

### Frame handling

Each scan has a "marker" frame near its start, which is compared and matched to the coming frames when the scan is closed.

When a scan starts, each coming frame is checked. Once a frame with sufficient visual information is detected, it is set to be the marker. Frames of the scan before the marker frame are not kept.

Scan frames are accumulated. Frames are kept so that the gap between them is about 1/6 of the frame size. This means that if the field of view, in the scanning direction, is 45 degrees, a frame will be kept every 7.5 degrees, and a full scan will hold about 48 frames.

After scanning about 270 degrees, we start comparing the current frames to the marker to try "closing" the scan. The 270 threshold represent the unreliability of azimuth estimate based on sensors and image registration inputs.

Once a frame is matched to the marker, the scan is closed. At this stage we need to connect the last frame from walking stage to the relevant scan frame, to create accurate junction point at scan entry.

This is done by comparing the last frame on the path (walking stage) to scan frames.

The user gets a feedback of scan closed, and should continue scanning until he leaves the room.

When the user starts walking out of the room, scan stop is detected, and the first frame of the path is compared to scan frames, to create an accurate junction point at scan exit.

If a scan closing point was missed, a new marker is chosen from among scan frames, the scan beginning is erased, and scanning continues. This is rare, and happens mostly if the scene changed, if the user moved while scanning, or if the device was tilted.

### Fallbacks and detection errors

### Incomplete scan

If a scan was stopped before being closed, the capture engine decides whether to keep it as "partial scan" or to convert all the frames to path frames. A scan is kept if it already holds more than 180 degrees.

### Very short path

If we moved for "scan" to "path" state, and shortly thereafter detected a scan again, we conclude that the scan stop was wrong and probably resulted from a shaking of the user's hand. In this case we continue the previously stopped scan. If we were in "redundant scan" mode, that is, the scan was already closed, we have no problem continuing. If the scan was not yet closed, we must restart the scan (that is - erase the incomplete scan just created), and choose a new marker.

### Image Matching

Matching two images is done whenever we need to "connect" two frames that are not consecutive. This can be for scan frame versus either scan marker, scan entry, or scan exit.

Matching is done as following:
First, the two images are registered by 2D translation, as done for consecutive frames. The "significance" of the minima found while registering, that is, the ratio of SAD value on best match for SAD values on other translations, is calculated and kept as a first score to evaluate the match.

Next, homography transformation is found to best transform one image to the other. This homography represents a slight distortion between images, resulting from camera tilt, or from the user moving slightly closer or farther from the scene.

A warped image is created according to 2D translation and homography. The similarity of the warped image to the other one is evaluated by two independent calculations - SAD on a set of selected grid points, uniformly distributed in the image, and cross-correlation on down sampled images.

The three scores - SAD minima significance, SAD on grid points and cross-correlation, are combined and threshold to get a final decision as to the two images match.

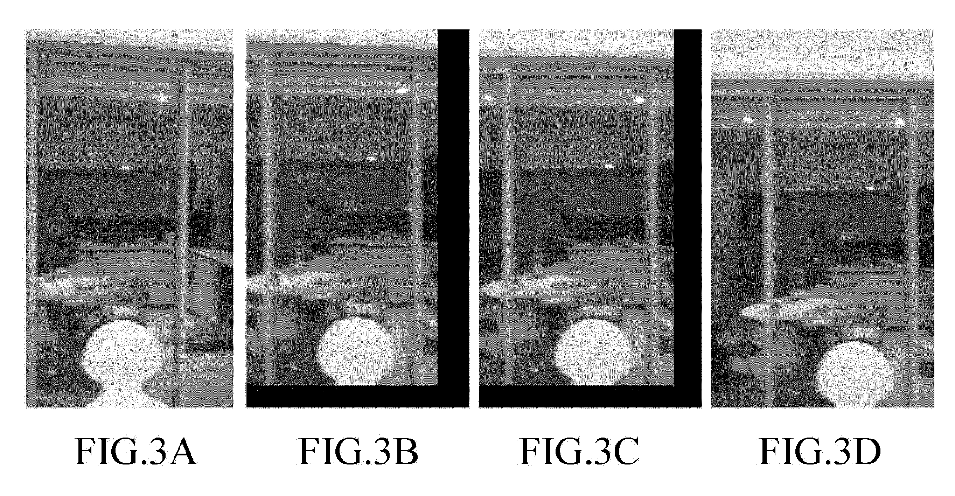

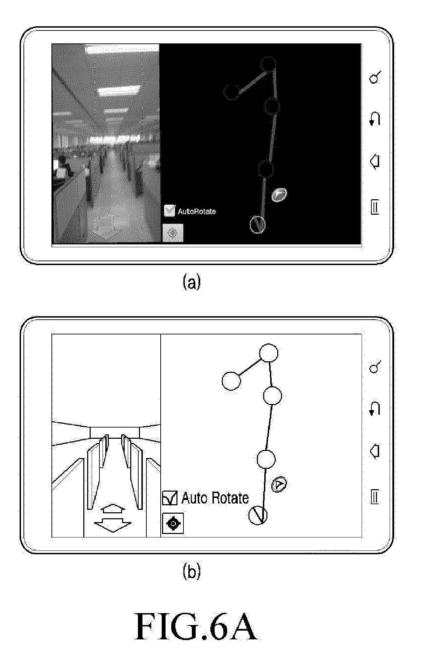

FIG. 3 is a diagram showing a process of transforming an image (a) into another image (d) through two stages such as a 2D image (b) and a slightly distorted image (c) in a mobile device.

### View Table structure

The View table contains a set of metadata parameters for each frame that was chosen to be saved for the virtual tour. Below is a description of the different fields of the table:
- Frame Id: a unique index to the frames number;
- Left Id: an index of the frame to the left of current frame. -1 if there is no such frame exists;
- Right Id: an index of the frame to the right of current frame. -1 if there is no such frame exists;
- Forward Id: an index of the frame ahead of the current frame. -1 if there is no such frame exists;
- Backward Id: an index of the frame behind the current frame. -1 if there is no such frame exists;
- Navigation X: X location of the current frame (This is calculated based on rough indoor navigation algorithm);
- Navigation Y: Y location of the current frame (This is calculated based on rough indoor navigation algorithm); and
- Azimuth: heading (relative to north) of the camera for current frame.

This table structure is defined in VirtualTourTypes.H:

```
           typedef struct
           {
                 IM_API_INT mInputId;
                 IM_API_INT mLeft, mRight, mForward, mBackward;
                 IM_API_FLOAT mNavigationX, mNavigationY;
                 IM_API_FLOAT mCmpVal;
       } VT_API_ViewRecord;
```

### Creating a Virtual tour - Application + GUI description

There are 2 steps to creating a virtual tour. First one is capturing the tour. This process involves going through the tour route and grabbing camera feed of the areas of interest. The second stage involves editing the automatic created map.

### Capture stage

### Overview

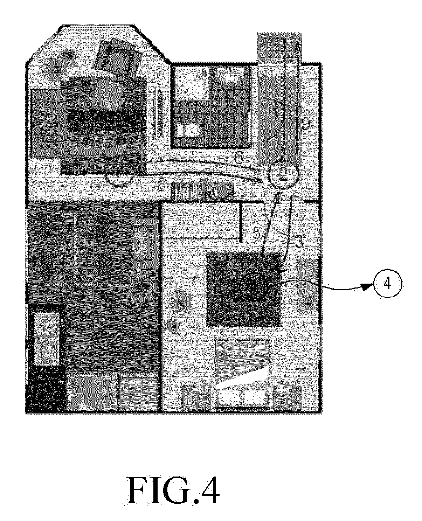

Before starting the capture stage the user should plan a route that will cover all places of interest in the tour. FIG. 4 is a diagram showing a capturing path prior to execution of capturing for VT creation in a mobile device. Note that there are 2 modes of capture:
1) Room scan - 360 deg scan.
2) Corridor scan - scan of a walk from room to room.

In the example of Fig. 4 the user will start walking from the house entrance (marked by route #1) then make a 360 deg turn (marked by circle #2) to scan the house entrance hall and so on until he is done with all areas.

### UI

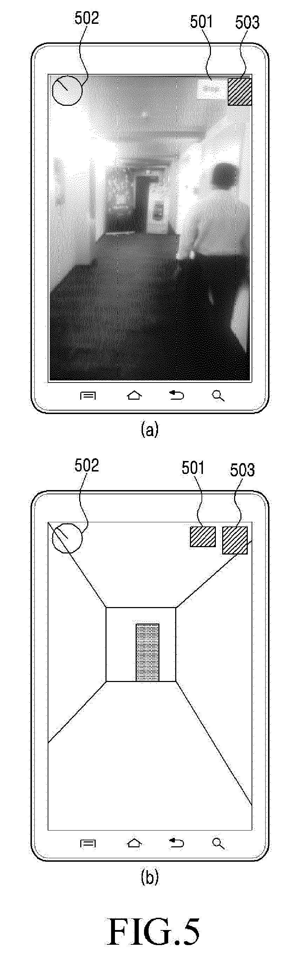

(a) of FIG. 5 is a diagram showing GUI display for guiding capturing during execution of a capturing operation for VT creation in a mobile device, and (b) of FIG. 5 is a diagram for briefly describing (a) of FIG. 5. In FIG. 5, as a GUI for guiding capturing during execution of the capturing operation for VT creation, a start/stop button 501, an azimuth 502, and a capturing state indicator 503 are displayed on the screen.

The start/stop button 501 performs recording of an image or stop recording of an image.

The azimuth 502 is an azimuth indicating the current location of the user.

The capturing state indicator 503 informs the user about the automatic capturing state. The capturing state indicator 503 is indicated in the following colors which represent different states.
○ Green - Corridor mapping is currently active.
○ Blue - Room mapping (360 deg turn) is currently active.
○ Grey - Current Room mapping is complete. This is to tell the user that the application detected a full scan of a room and he can continue walking to next corridor.
○ Red - Virtual tour engine error.

In addition, in this specific illustrative example, the user can use the android menu button in order to perform the following operations:
- View Recording - will launch the vtour viewer for the currently finished vtour file. If this is selected before recording the user will be asked to choose file from a list;
- View Map - will launch the vtour map viewer for the currently finished vtour file. If this is selected before recording the user will be asked to choose file from list;
- List - will let the user to choose an existing vtour file from a list and open it in the map viewer;
- Delete - will let the user choose an existing vtour file from a list and delete it; and
- Delete last recording - will delete the last vtour file recorded.

### Map Edit stage

After finishing the capture stage, a database containing all the images and their calculated location is available. From that database the application automatically creates a map. Since the sensors data is not accurate enough a manual map editing is needed. This is done by the map edit stage. The map edit stage allows the user the following changes to the map:

### Room movement

On an automatically created VT map, long press on a room and then drag it to the desired new position. By doing so the user can fix the room locations to match their actual location.

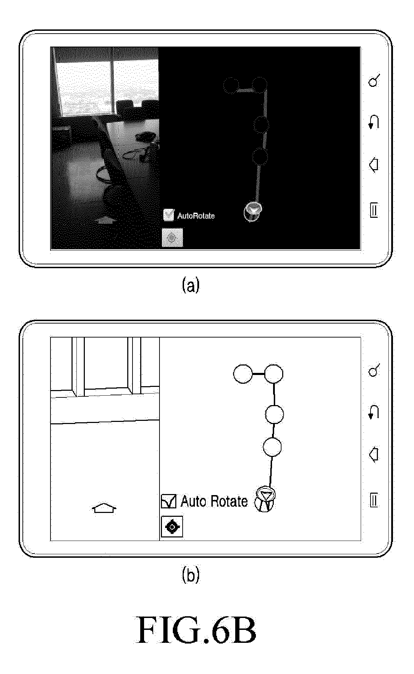

FIGs. 6A and 6B are diagrams showing a room movement editing operation in a manual map editing step of a mobile device. (a) of FIG. 6A shows a VT map prior to room movement, and (b) of FIG. 6A is a diagram for briefly describing (a) of FIG. 6A. (a) of FIG. 6B shows a VT map after room movement, and (b) of FIG. 6B is a diagram for briefly describing (a) of FIG. 6B.

Therefore, the user moved the rooms to match the actual 90 degree turns he made and straight line walk.

In order to move a room the user needs to long press on a room and drag it to the new desired position. Note that at the end of all changes the user needs to save the new vtour file (via options menu-> save).

### Room merge

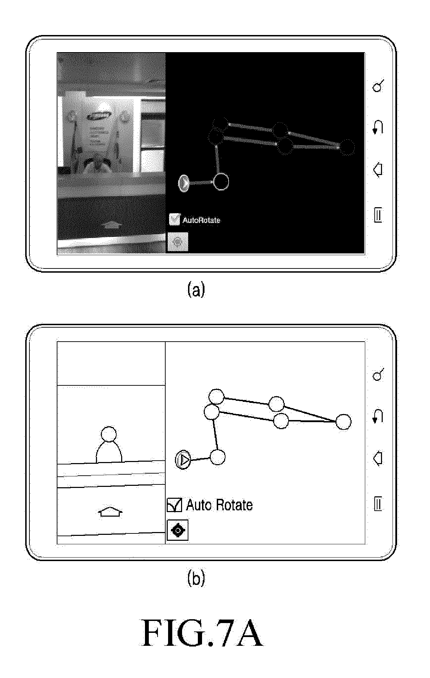

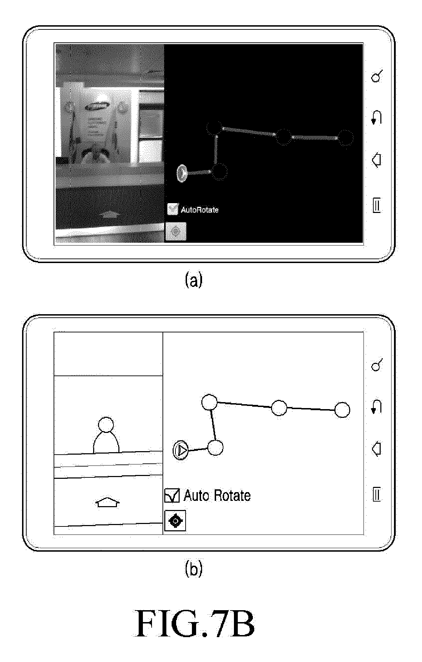

If the same room is scanned twice it is possible to merge two rooms. For example in the floor plan showed in FIG. 4, room#2 is scanned first when coming from corridor #1 and the same room #2 is scanned second time when coming from corridor #5. In that case the two rooms will have to be merged. The screen shots of Fig. 7 show a before (Fig. 7A) and after (Fig. 7B) merge of a typical map.

In order to actually make a room merge the user long presses on a room and then drags it over the target room for merge. The user will be asked if he wants to merge the rooms and once he presses ok the merge will be done.

FIGs. 7A and 7B are diagrams showing a room merge editing operation in a manual map editing step of a mobile device. (a) of FIG. 7A shows a VT map prior to room merge, and (b) of FIG, 7A is a diagram for briefly describing (a) of FIG. 7A. (a) of FIG. 7B shows a VT map after room merge, and (b) of FIG. 7B is a diagram for briefly describing (a) of FIG. 7B.

Note that at the end of all changes the user needs to save the new vtour file (via options menu-> save).

### Corridor split

The map view, always show a corridor as a straight line between 2 rooms. Some times when a corridor is not straight it is desired to add a split point in a corridor line. That new split point can be moved and create a corridor which is not straight.

In order to create a corridor split point the user needs to long press on the corridor at the location of the desired split point. In order to move a split point the user long presses the point and then moves it.

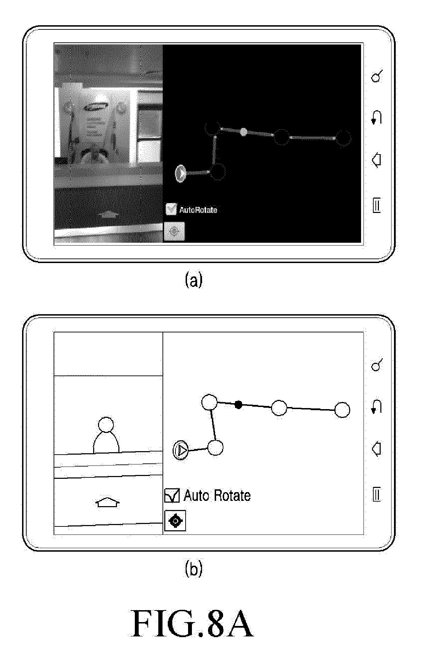

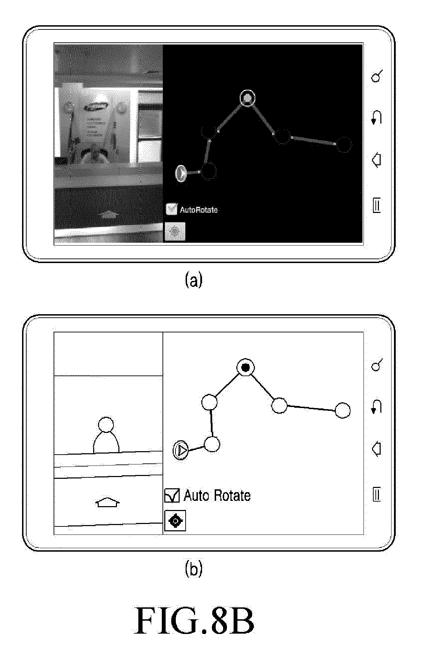

FIGs. 8A and 8B are diagrams showing a corridor split editing operation in a manual map editing step of a mobile device. (a) of FIG. 8A shows a VT map prior to corridor split, and (b) of FIG. 8A is a diagram for briefly describing (a) of FIG. 8A. (a) of FIG. 8B shows a VT map after corridor split, and (b) of FIG. 8B is a diagram for briefly describing (a) of FIG. 8B.

Note that at the end of all changes the user needs to save the new vtour file (via options menu-> save).

### Corridor split merge

It is possible to merge a corridor split point with a room. This is needed in cases a user maps several rooms while walking in one direction and then returns back just in order to record the corridors view on the other direction. Note that at the end of all changes the user needs to save the new vtour file (via options menu-> save).

### Options menu

In the mobile device, pressing the options menu allows the user to do the following operations:
- Open - choose a vtour file to edit;
- View - runs the vtour viewer; and
- Settings - Opens the setting screen which allows:
   ○ Check "auto rotate" to allow map to rotate according to the current azimuth; and
   ○ Check "Show Map Debug Info" to show position of each frame on the map (marked with an arrow in the direction of picture taken).
- Save - save all the changes made in the map.

All the above description and examples have been provided for the purpose of illustration and are not meant to limit the invention in any way. Many alternative sensors and sensor analyses can be provided, as well as many other viewing and editing options, all without exceeding the scope of the invention.

By providing a method and apparatus for creating a VT in a mobile device, assistance and feedback for capturing are provided to a user during execution of image capturing for VT creation, a VT map is automatically created and provided during capturing, and selectively, social sharing may be possible.

## Claims

1. A method for creating a Virtual Tour (VT) in a mobile device, the method comprising:
capturing an image in a VT creation mode;
automatically creating a VT map while capturing the image; and
if the VT creation mode is terminated, saving the captured images as a file for the VT.

2. The method of claim 1, wherein the capturing of the image comprises displaying a Graphic User Interface (GUI) which guides capturing on a screen, while capturing the image.

3. The method of claim 2, wherein the GUI comprises a start/stop button for executing recording of the captured image or stopping the recording, an azimuth indicating a current location of a user, and a capturing state indicator indicating a current capturing state.

4. The method of claim 3, wherein the capturing state indicator represents a scanning active state, a scanning complete state, a movement active state, and a movement complete state with different colors.

5. The method of claim 1, wherein the capturing of the image comprises:
determining a capturing operation by using a camera position change and sensor data in the VT creation mode;
if the capturing operation is a 360 degree turn scanning operation, matching images captured through the scanning operation to a position in which the capturing operation occurs;
if the capturing operation is a forward/backward moving operation, matching images captured through the moving operation to a position in which the capturing operation occurs; and
if the capturing operation is a stopping operation, matching images captured through the stopping operation to a position in which the capturing operation occurs.

6. The method of claim 1, wherein the automatically creating of the VT map comprises creating a map associated with each position in which the capturing operation occurs, by using a sensor capable of estimating a position, which is provided in the mobile device.

7. The method of claim 1, further comprising:
manually editing the automatically created VT map.

8. The method of claim 1, further comprising socially sharing the saved file for the VT.

9. An apparatus for creating a Virtual Tour (VT) in a mobile device, the apparatus comprising:
a camera;
sensors; and
a capture engine for capturing an image in a VT creation mode, automatically creating a VT map while capturing the image, and saving the captured images as a file for the VT, if the VT creation mode is terminated.

10. The apparatus of claim 9, wherein the capture engine displays a Graphic User Interface (GUI) which guides capturing on a screen, while capturing the image.

11. The apparatus of claim 10, wherein the GUI comprises a start/stop button for executing recording of the captured image or stopping the recording, an azimuth indicating a current location of a user, and a capturing state indicator indicating a current capturing state.

12. The apparatus of claim 10, wherein the capturing state indicator represents a scanning active state, a scanning complete state, a movement active state, and a movement complete state with different colors.

13. The apparatus of claim 9, wherein the capture engine determines a capturing operation by using a camera position change and sensor data in the VT creation mode, if the capturing operation is a 360 degree turn scanning operation, matches images captured through the scanning operation to a position in which the capturing operation occurs, if the capturing operation is a forward/backward moving operation, matches images captured through the moving operation to a position in which the capturing operation occurs, and if the capturing operation is a stopping operation, matches images captured through the stopping operation to a position in which the capturing operation occurs.

14. The apparatus of claim 9, wherein the capture engine creates a map associated with each position in which the capturing operation occurs, by using a sensor capable of estimating a position, which is provided in the mobile device.

15. The apparatus of claim 9, further comprising a manual map editor for manually editing the automatically created VT map.

16. The apparatus of claim 9, wherein the saved file for the VT is socially shared.
